(19) Europäisches Patentamt
European Patent Office
Office européen des brevets

(11) Veröffentlichungsnummer: **0 213 490**
**B1**

(12) # EUROPÄISCHE PATENTSCHRIFT

(45) Veröffentlichungstag der Patentschrift: **25.10.89**

(51) Int. Cl.⁴: **G 03 C 7/32** // C09B29/50

(21) Anmeldenummer: **86111202.7**

(22) Anmeldetag: **13.08.86**

(54) **Farbfotografisches Aufzeichnungsmaterial.**

(30) Priorität: **24.08.85 DE 3530357**

(43) Veröffentlichungstag der Anmeldung: **11.03.87 Patentblatt 87/11**

(45) Bekanntmachung des Hinweises auf die Patenterteilung: **25.10.89 Patentblatt 89/43**

(84) Benannte Vertragsstaaten: **BE DE FR GB**

(56) Entgegenhaltungen:
**US-A-2 983 606**

**PATENT ABSTRACTS OF JAPAN, Band 8, Nr. 10 (P-248) 1447, 18. Januar 1984; & JP-A-58 172 647 (KONISHIROKU SHASHIN KOGYO K.K.) 11-10-1983 (Kat. D)**

(73) Patentinhaber: **Agfa- Gevaert AG, D-5090 Leverkusen 1 (DE)**

(72) Erfinder: **Renner, Günter, Dr., Wagnerstrasse 50, D-5060 Bergisch Gladbach 2 (DE)**
Erfinder: **Langen, Hans, Dr., Weidengarten 16, D-5300 Bonn 1 (DE)**
Erfinder: **Junkers, Günter, Dr., Bergische Landstrasse 210, D-5090 Leverkusen 1 (DE)**

**EP 0 213 490 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung betrifft ein farbfotografisches Aufzeichnungsmaterial mit mindestens einer Silberhalogenidemulsionsschicht, der ein Purpurkuppler zugeordnet ist. Das erfindungsgemäße Aufzeichnungsmaterial enthält weiterhin mindestens einen gelben 4-Bisalkoxyphenylazopyrazolon-farbstoff.

Farbfotografische Aufzeichnungsmaterialen, die nach dem chromogenen Verfahren verarbeitet werden, enthalten häufig gelbe Farbstoffe, die den verschiedensten Zwecken dienen. Von besonderer Bedeutung sind hierbei Farbstoffe aus der Klasse der 4-Arylazopyrazolone. Bei geeigneter Struktur sind solche Farbstoffe beispielsweise in der Lage mit dem Oxidationsprodukt des verwendeten Farbentwicklers zu reagieren und hierbei durch Bildung von Purpurfarbstoffen zum Aufbau des purpurnen Teilfarbenbildes beizutragen, wobei gleichzeitig bildmäßig der gelbe Farbstoff zerstört wird. Derartige gelbe Farbstoffe eignen sich daher in bekannter Weise als Maskenkuppler zur Korrektur unerwünschter gelber Nebendichten der Bildfarbstoffe, insbesondere der aus den farblosen oder farbigen Purpurkupplern erzeugten Purpurfarbstoffe. Dieses Farbkorrekturprinzip ist beispielsweise beschrieben in US-A-2 428 054 und US-A-2 449 966. Geeignete Maskenkuppler haben nicht nur eine hohe Kupplungsaktivität, sondern erfüllen auch in spektraler Hinsicht die an sie gestellten Forderungen. Das bedeutet, daß die gelbe Eigenfarbe solcher Maskenkuppler der zu maskierenden gelben Nebendichte möglichst gut angepaßt ist und daß auch der bei der Kupplung erzeugte Farbstoff hauptsächlich im grünen Spektralbereich und möglichst wenig in den anderen Spektralbereichen (blau, rot) absorbiert.

Aber auch bei nur geringer Kupplungsaktivität können solche gelben Farbstoffe mit Vorteil als Korrekturfarbstoffe verwendet werden, nämlich zur Verbesserung der Schärfe sowie als sogenannte Dmin-Farbstoffe zur Einstellung einer gewünschten gelben Dichte in den verarbeiteten farbfotograf ischen Aufzeichnungsmaterialien, um diese bei dem sich anschließenden Kopierprozeß mit Aufzeichnungsmaterialien anderer Herkunft und Zusammensetzung kompatibel zu machen, ohne gleichzeitig eine Übermaskierung zu bewirken. Für diesen Zweck eignen sich hauptsächlich solche gelben Farbstoffe, die sich von 3-Acylaminopyrazolon herleiten.

In US-A-2 983 608, DE-A-2 418 959, DE-A-2 643 965, GB-A-1 044 778 und JP-N-58 172 647 sind von 4-Phenylazopyrazolon abgeleitete gelbe Farbstoffe beschrieben, die im Phenylazoteil Substituenten tragen, die dort die Elektronendichte erhöhen, z. B. Alkoxy- oder Acylaminogruppen oder Gruppen, die im alkalischen Medium Anionen zu bilden vermögen, wie etwa (phenolische) Hydroxylgruppen. Die genannten Farbstof fe weisen Absorptionsmaxima in dem für die angestrebte Verbesserung der Farbwiedergabe geeigneten Spektralbereich bei etwa 440 ± 20 nm auf.

Ein wesentlicher Nachteil der Verbindungen ist in deren Schwerlöslichkeit begründet. Die gelben Farbstoffe werden normalerweise den fotografischen Aufzeichnungsmaterialien in emulgierter Form zugesetzt; dazu ist es notwendig die Verbindungen in einem organischen Lösungsmittel, beispielsweise Ethylacetat oder Diethylcarbonat gegebenenfalls unter Zusatz eines weiteren hochsiedenden organischen Lösungsmittels, dem Ölbildner, beispielsweise Trikresylphosphat, Dibutylphthalat u.a. zu lösen. Teilweise gelingt es überhaupt nicht die Verbindungen in üblicher, gebräuchlicher Menge (ca. vierfache Menge) eines organischen Lösungsmittels bei 60 - 70°C zu lösen. In anderen Fällen wird zwar eine Lösung erreicht aber bereits geringfügiges Abkühlen der Farbstofflösung führt zur Kristallisation, so daß die weitere Handhabung zum Zwecke des Emulgierens erschwert ist. Darüberhinaus wird häufig beobachtet, daß der einmal auskristallisierte Farbstoff auch mit deutlich größeren Mengen Lösungsmittel selbst bei gesteigerter Temperatur nicht mehr in Lösung zu bringen ist. Diese Eigenschaft der Farbstoffe bringt es auch mit sich, daß dieser Farbstoff auch in emulgierter Form und auch in fotograf ischen Schichten noch stark zur Kristallisation neigt.

Der Erfindung liegt die Aufgabe zugrunde ein farbfotografisches Aufzeichnungsmaterial anzugeben, das Silberhalogenid und Farbkuppler sowie zu Zwecken der Farbkorrektur mindestens einen gelben Farbstoff mit einem Absorptionsmaximum bei ca. 440 ± 20 nm enthält, wobei der gelbe Farbstoff sich durch leichte Herstellbarkeit sowie insbesondere durch hervorragende Löslichkeit in organischen Lösungsmitteln und Emulgierbarkeit in hydrophilen Bindemittelmedien auszeichnet.

Gegenstand der Erfindung ist ein farbfotografisches Aufzeichnungsmaterial mit mindestens einer Silberhalogenidemulsionsschicht, der ein Purpurkuppler zugeordnet ist, und mindestens einem gelben 4-Bisalkoxyphenylazopyrazolonfarbstoff, der in einer Silberhalogenidemulsionsschicht oder in einer nicht lichtempfindlichen Bindemittelschicht enthalten ist, dadurch gekennzeichnet, daß der gelbe Farbstoff der folgenden Formel 1 entspricht

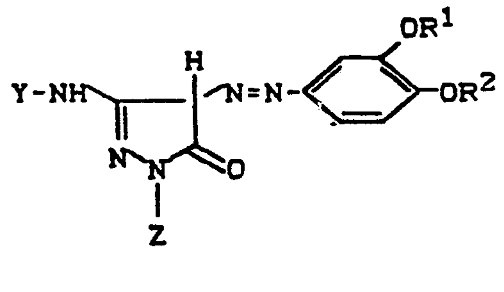

(I)

worin bedeuten

Y Aryl oder Acyl,

$R^1$, $R^2$ je einen Rest der Formel

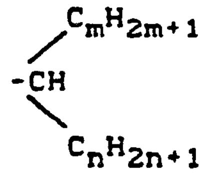

wobei m und n für 1, 2 oder 3 stehen und $m + n \leqslant 4$;
Z einen gegebenenfalls substituierten Phenylrest.

Bei den durch $R^1$ und $R^2$ dargestellten Alkylresten handelt es sich demnach um s-Alkylreste mit 3 bis 5 C-Atomen, d.h. um Alkylreste die am α-C-Atom verzweigt sind. Vorzugsweise lassen sich $R^1$ und $R^2$ auch durch die Formel

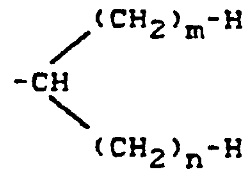

darstellen und insbesondere handelt es sich um Isopropyl bzw. s-Butyl. $R^1$ und $R^2$ brauchen nicht notwendigerweise identisch zu sein.

Ein durch Y dargestellter Arylrest ist in der Regel ein substituierter Phenylrest. In diesem Fall können die Verbindungen vorzugsweise durch folgende Formel II dargestellt werden

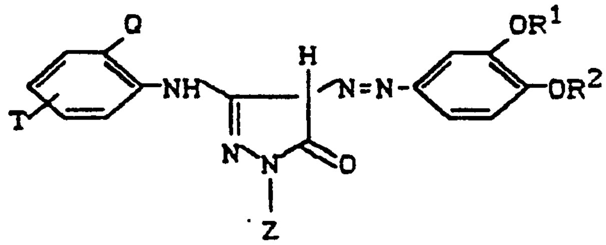

(II)

worin $R^1$, $R^2$ und Z die bereits angegebene Bedeutung haben und worin bedeuten

Q H, Halogen, insbesondere Cl, oder Alkoxy, insbesondere $-OCH_3$;

T einen gegebenenfalls über ein Bindeglied X angeknüpften organischen Rest, insbesondere einen gegebenenfalls substituierten Alkylrest oder Cycloalkylrest.

Als Bindeglied X für den organischen Rest kommen beispielsweise die folgenden in Frage:

-NH-CO-
-NH-CO-O-

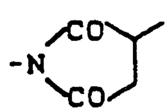

-CO-O-
$-SO_2-$
$-SO_2-NH-$
$-SO_2-NR-$ (R = Alkyl)
-CO-NH-
-CO-NR-

Der durch T dargestellten organische Rest kann insbesondere als Emulgierrest dienen; als solcher kann er gradkettige, gegebenenfalls ungesättigte, oder verzweigte Alkylreste sowie auch aromatische Ringe beinhalten.

Verbindungen der Formel II stellen im allgemeinen geeignete gelbe Maskenkuppler mit hoher Kupplungsreaktivität dar.

Ein in Formel I durch Y dargestellten Acylrest ist insbesondere ein von einer aliphatischen oder aromatischen Carbonsäure abgeleitete Arcylrest, oder ein Acylrest der von Kohlensäuremonoester abgeleitet sind. Die

betreffenden Verbindungen lassen sich durch folgende Formel III darstellen

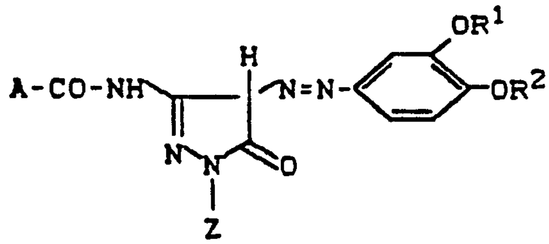

(III)

worin $R^1$, $R^2$ und Z die bereits angegebene Bedeutung haben und worin A für gegebenenfalls substituiertes Aryl, Alkyl oder Alkoxy steht.

Verbindungen der Formel III eignen sich überwiegend als Dmin-Farbstoffe.

Ein in den Formeln I, II oder III durch Z dargestellter Phenylrest kann unsubstiutiert sein oder einen oder mehrere gleiche oder verschiedene Substituenten enthalten, z. B. Halogen (beispielsweise Cl oder Br), Alkyl, Alkoxy, Alkylsulfonyl, Alkoxcarbonyl oder Acylamino.

Verbindungen der Formel II

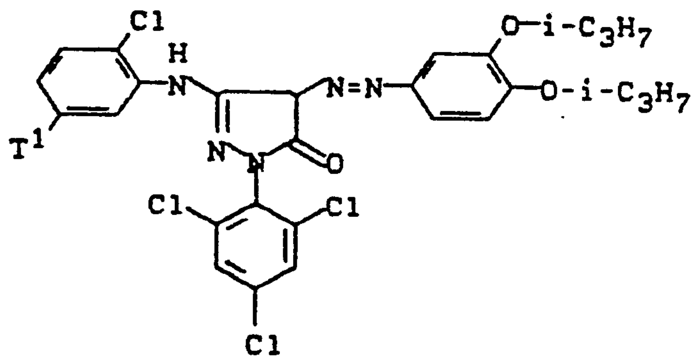

$T^1$ =

II-1 $C_{13}H_{27}$-OC-NH- F = 136-38° C

II-2 $C_{14}H_{29}$-CO-NH- F = 143-144° C

II-3 $C_{16}H_{33}$-O-CO-NH- F = 99-101° C

II-4

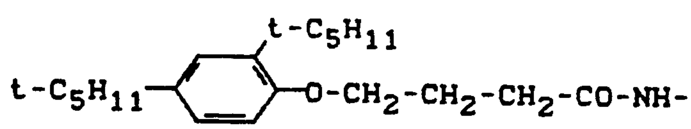

F = 108-110° C

II-5

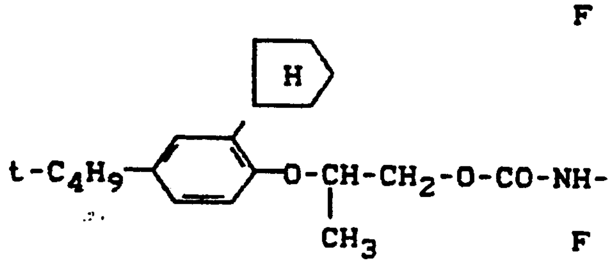

F = 81-84° C

Verbindungen der Formel II (Fortsetzung)

II-6 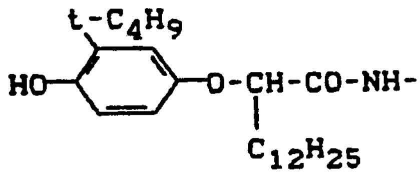 F = 108-111° C

II-7 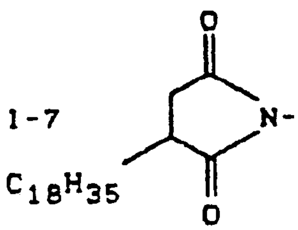 F = 99-102°C

II-8 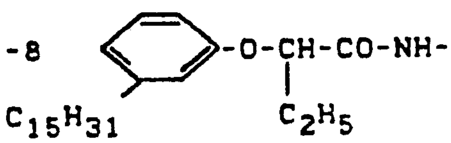 F = 83-84°C

II-9 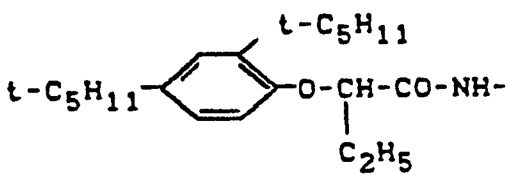 F = 142-145°C

II-10 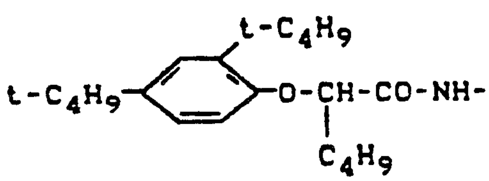 F = 140-143°C

II-11 $C_{12}H_{25}O-CO-$ F = 88-91°C

II-12 $C_{16}H_{33}-N(H)-SO_2-$ F = 121-125°C

Verbindungen der Formel II (Fortsetzung)

II-13 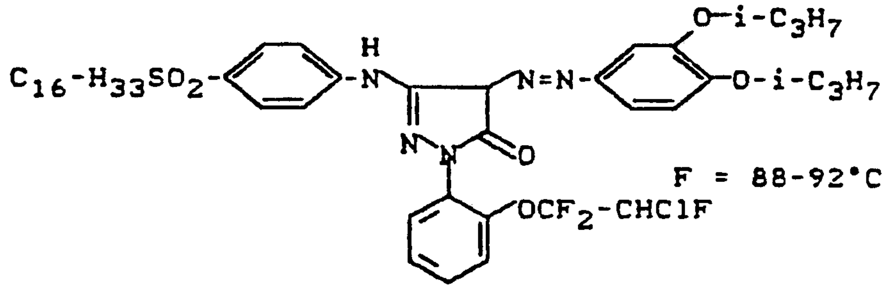

F = 88-92°C

II-14 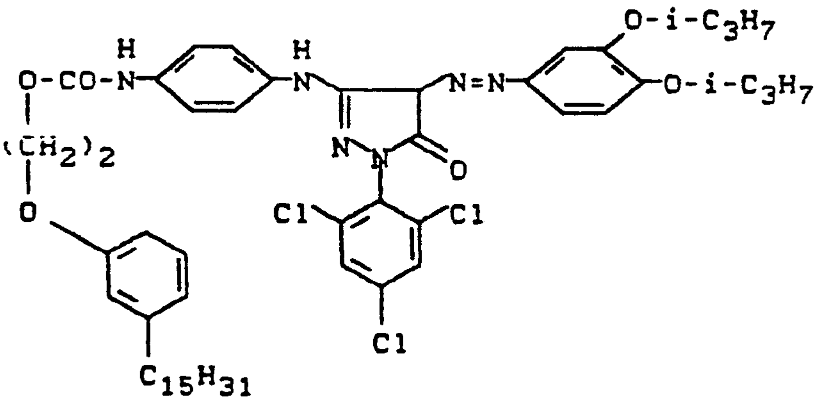

II-15 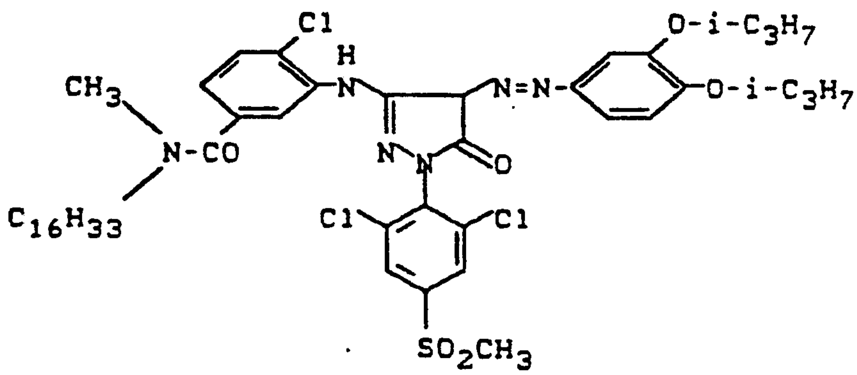

Verbindungen der Formel II (Fortsetzung)

II-16

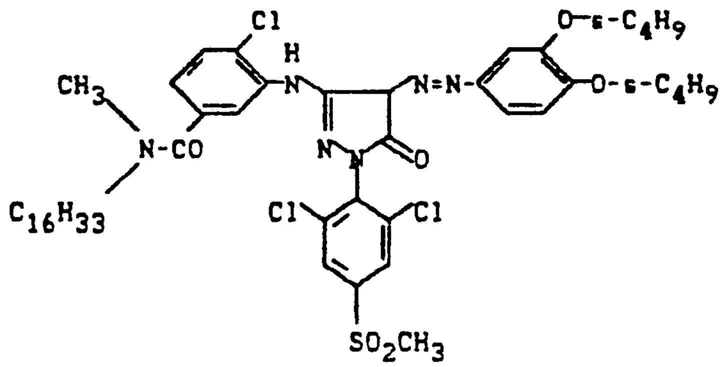

II-17

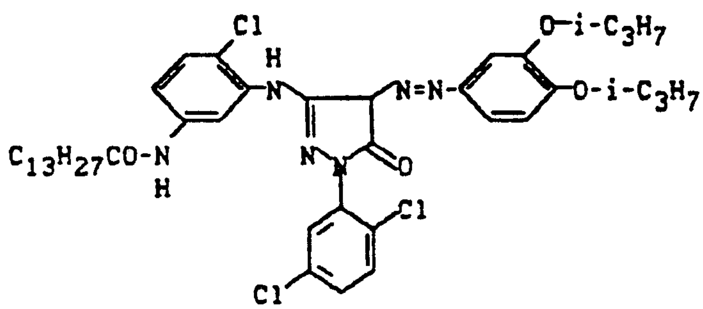

II-18

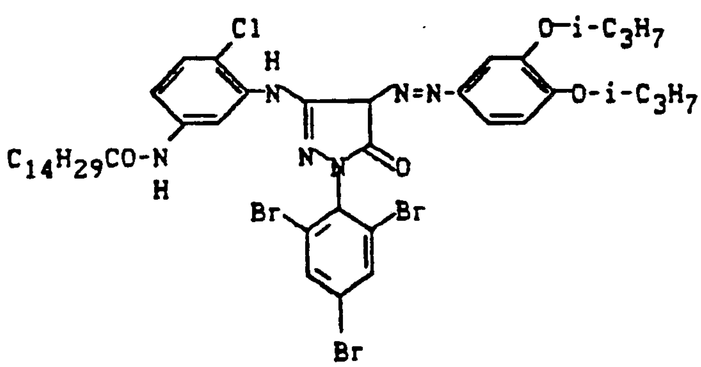

Verbindungen der Formel II (Fortsetzung)

II-19

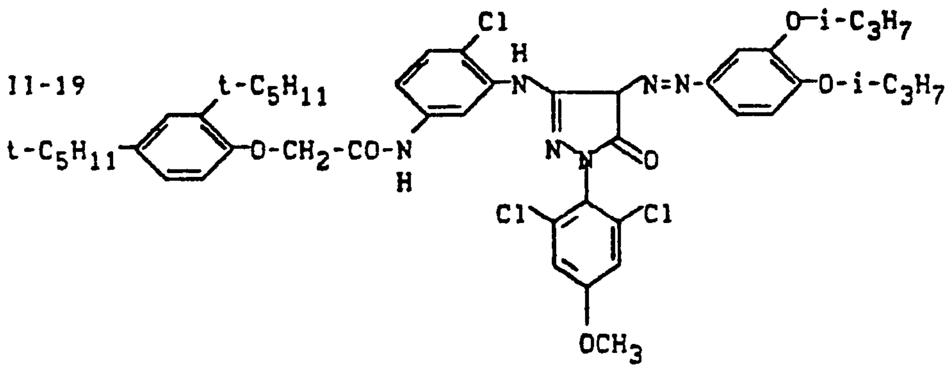

II-20

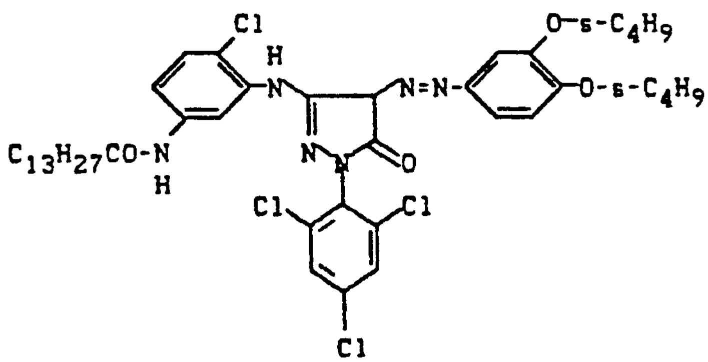

II-21

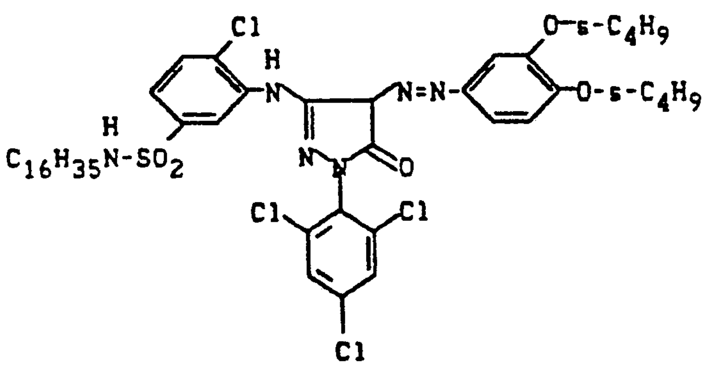

Verbindungen der Formel II (Fortsetzung)

II-22

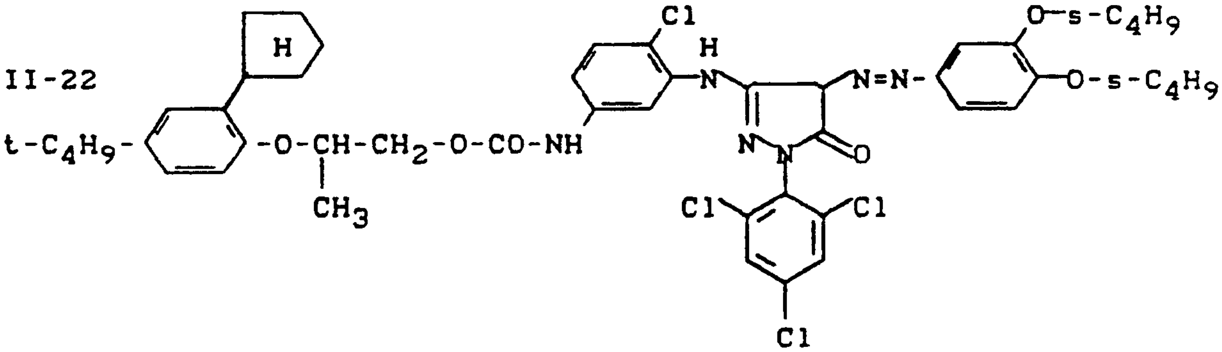

II-23

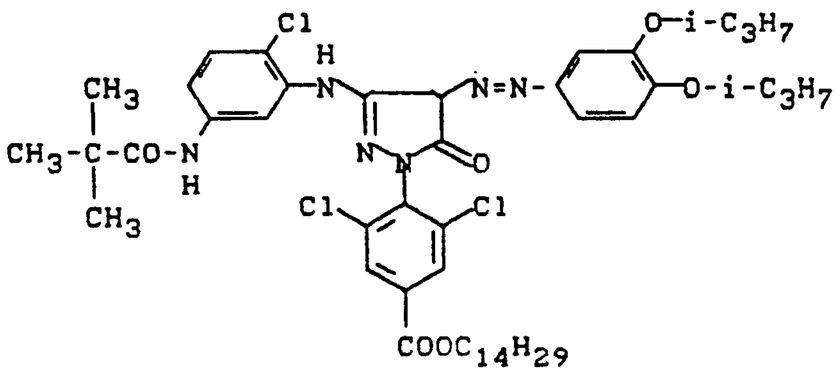

II-24

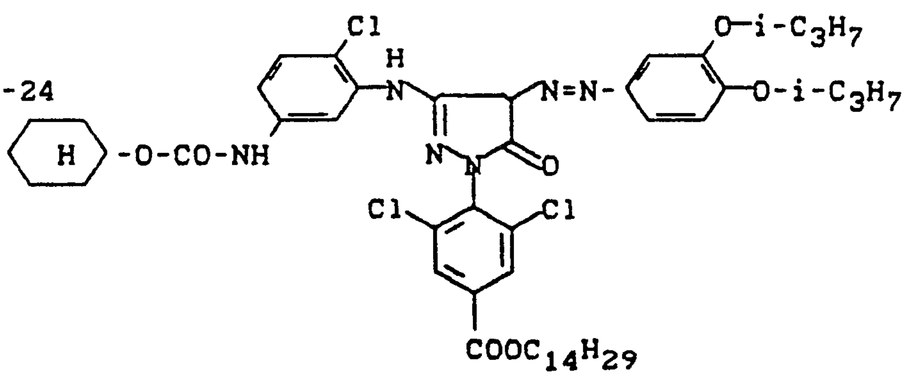

Verbindungen der Formel II (Fortsetzung)

II-25

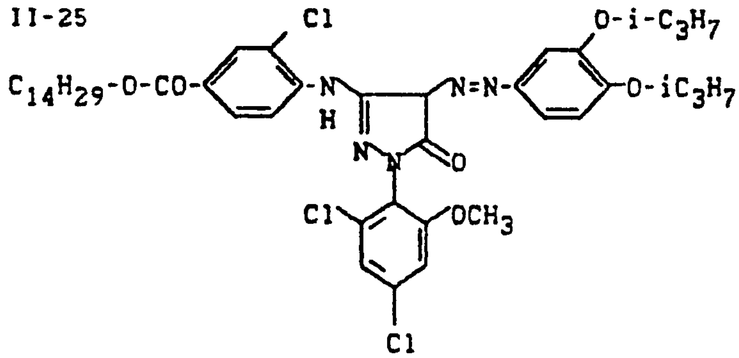

II-26

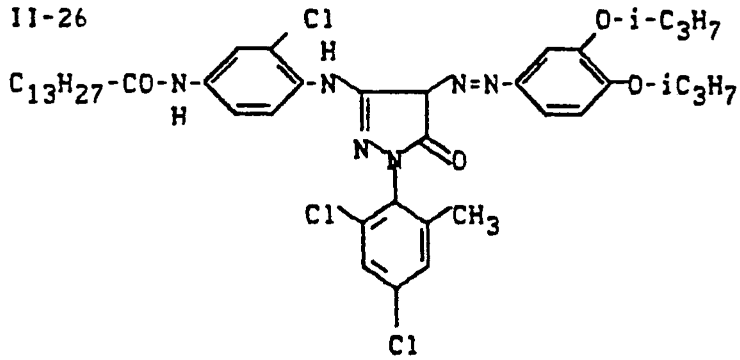

Verbindungen der Formel III

III-1

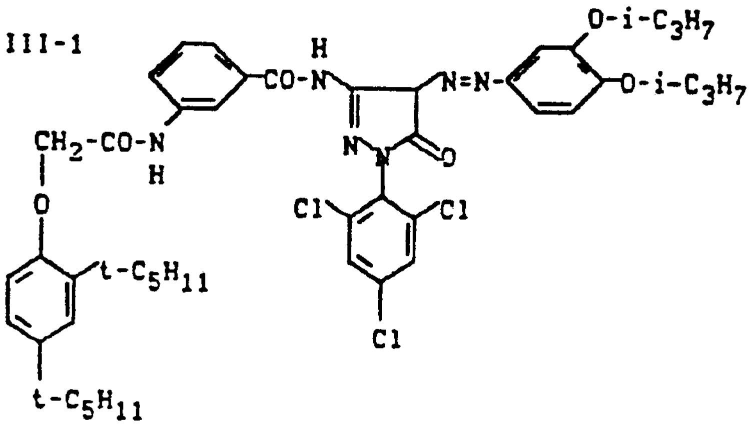

III-2

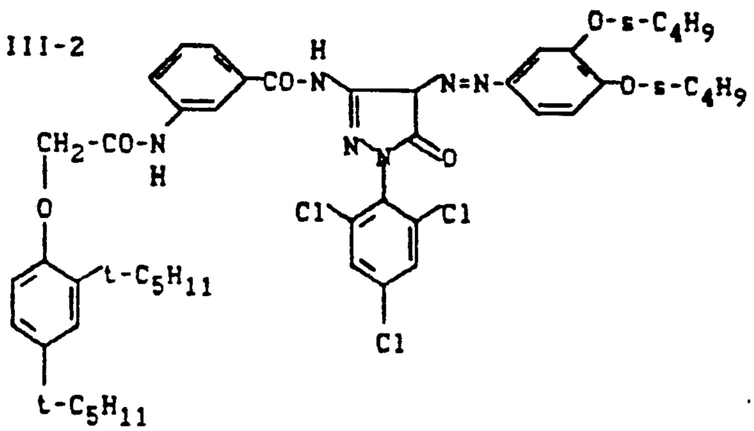

III-3

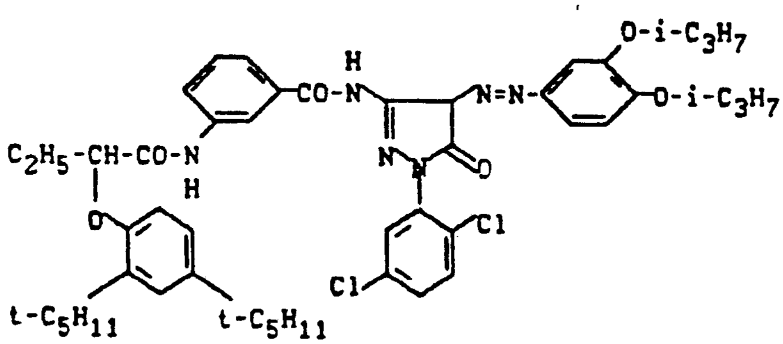

Verbindungen der Formel III (Fortsetzung)

III-4

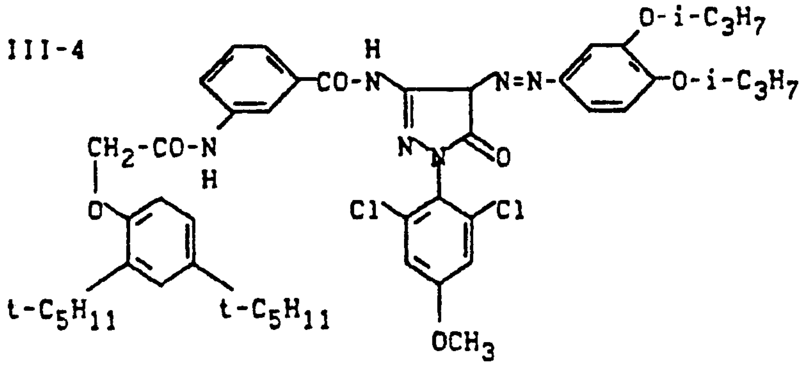

III-5

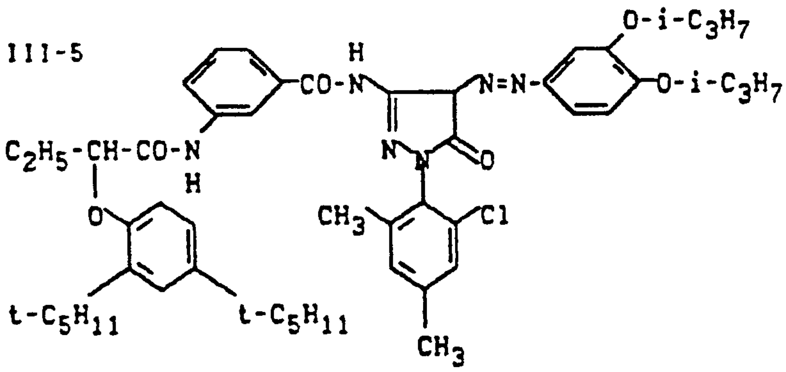

III-6

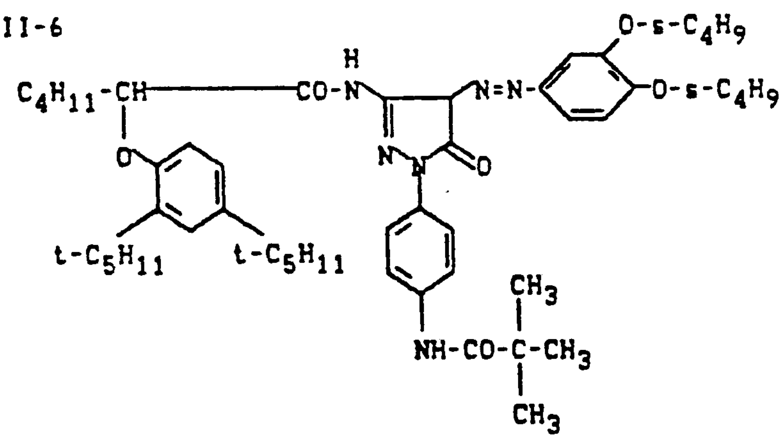

Verbindungen der Formel III (Fortsetzung)

III-7

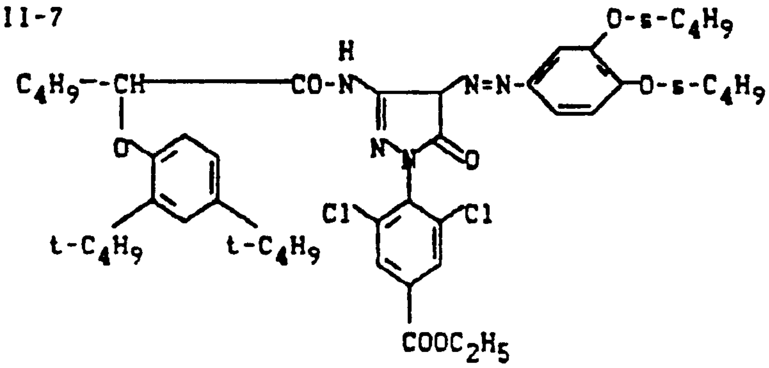

III-8

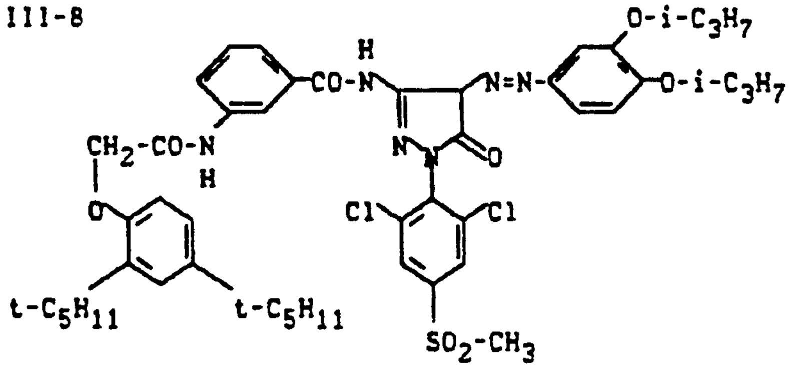

III-9

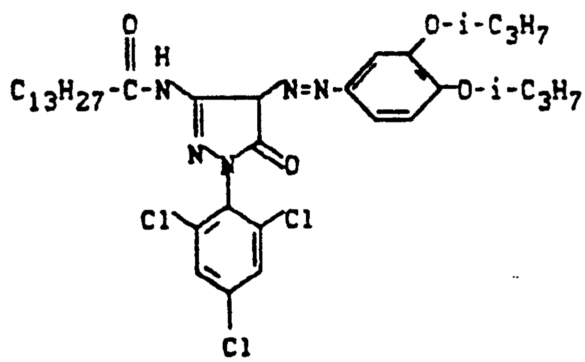

Verbindungen der Formel III (Fortsetzung)

III-10

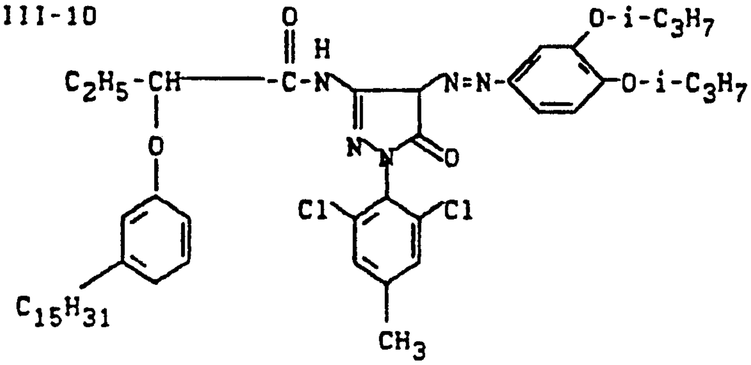

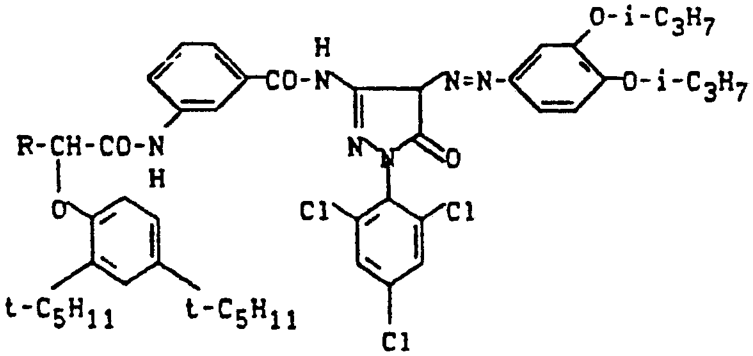

III-11 R = $-C_2H_5$

III-12 R = $-n-C_4H_9$

III-13

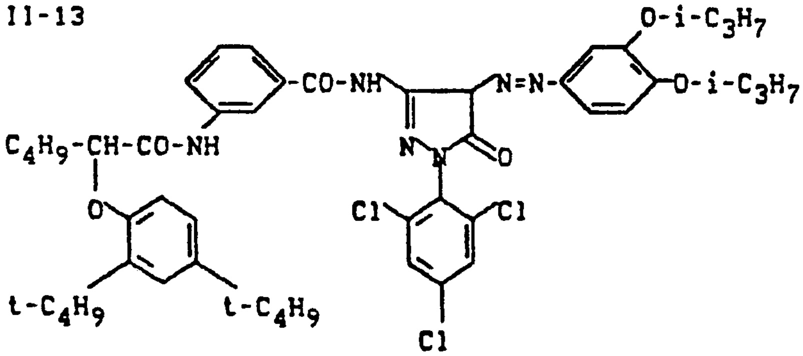

Die Herstellung der erfindungsgemäßen Verbindungen erfolgt in an sich bekannter Art und Weise: In wäßrigalkoholischer Lösung wird das Anilinoderivat bei -5 ± 5°C in saurer Lösung (2 - 4 mol Chlorwasserstoffsäure) mit äquimolarer Menge Natriumnitrit diazotiert. Die so erhaltene Diazoniumsalzlösung wird unter Rühren in eine alkalische Lösung des 4-Äquivalentpyrazolonkupplers bei 10 - 30°C getropft. Als Lösungsmittel können beispielsweise Alkohole, z. B. Methanol, in Gegenwart der entsprechenden Alkoholate, Natronlauge oder Pyridin verwendet werden. Der Farbstoff wird durch Ausrühren dieser Lösungen in wäßrig saure Lösung in fester Form erhalten.

**Herstellung der Verbindung II-1**

13,0 g (0,053 mol) 3,4-Diisopropoxyanilin-Hydrochlorid wurden in 50 ml Ethanol und 10 ml konz. Salzsäure verrührt und bei 0 - 5°C mit einer Lösung aus 45 g (0,058 mol) Natriumnitril in 80 ml Wasser diazotiert. Zur Vernichtung eines eventuellen Nitritüberschusses wurden nach 30 min 0,5 g Amidosulfonsäure zugegeben. Diese Diazoniumsalzlösung wurde langsam in eine Lösung aus 30 g (0,49 mol) 1-(2,4,6-Trichlorphenyl)-3-(2-chlor-5-tetradecanamido)-anilino-pyrazolon 5 in 250 ml Pyridin eingetragen. Es wurde 30 min nachgerührt, mit Eiswasser/Salzsäure ausgerührt, abgesaugt, mit Wasser gewaschen und getrocknet. Das Rohprodukt wurde aus 160 ml n-Propanol umkristallisiert. Ausbeute: 34,5 g = 85 % d.Th.

**Herstellung der Verbindung III-1**

0,11 mol Diisopropoxyanilin wurden wie oben angegeben bei 0 - 5°C diazotiert. Bei Diazoniumsalzlösung wurde in eine Lösung von 70 g 1-(2,4,6-Trichlorphenyl)-3-[3'-α-(2,4-di-tert-amylphenoxy-butyramido-benzamido]-pyrazolon-5 und 6 g Natriummethylat in 400 ml Methanol gegeben. In Wasser/Salzsäure wurde ausgefällt, abgesaugt und gewaschen. Der getrocknete Rückstand wurde aus Butanol umgelöst. Ausbeute: 74 g = 83 % d.Th.

Die erfindungsgemäßen Gelbfarbstoffe zeichnen sich gleichermaßen durch ihre günstigen spektralen Eigenschaften sowie durch ihre hervorragende Löslichkeit in organischen Lösungsmitteln aus. Ihr Absorptionsmaximum im Bereich von 440 ± 20 nm macht sie gleichermaßen geeignet für Farbkorrekturzwecke und zwar unabhängig davon, ob sie aufgrund ihrer Struktur eine höhere oder geringeren Kupplungsaktivität aufweisen und somit als Maskenkuppler zur Maskierung der unerwünschten gelben Nebendichte besser geeignet oder weniger gut geeignet sind.

Die gelben Farbstoffe können wie üblich in fotografische Schichten eingearbeitet werden, wobei ihnen zur Herstellung entsprechender Dispersionen ihre hervorragende Löslichkeit in organischen Lösungsmitteln sehr zustatten kommt. Und zwar können sie je nach Eignung und Verwendungszweck entweder einer silberhalogenidhaltigen Schicht (vorzugsweise Verbindungen der Formel II) oder einer silberhalogenidfreien Schicht (vorzugsweise Verbindungen der Formel III) zugesetzt werden. Während die reaktiven Verbindungen vorzugsweise einer grünsensibilisierten Silberhalogenidemulsionsschicht zugesetzt werden, werden die weniger reaktiven Verbindungen hauptsächlich in einer oder mehreren Zwischenschichten, die sich in enger räumlicher Beziehung zu einer grünsensibilisierten Silberhalogenidemulsionsschicht befinden, verwendet, z. B. in einer der Zwischenschichten, die die grünsensibilisierte Silberhalogenidemulsionsschicht oder das grünempfindliche Schichtpaket begrenzen, oder in einer Zwischenschicht, die zwischen dem Schichtträger und der untersten lichtempfindlichen Schicht angeordnet ist.

Zu Zwecken der Maskierung wird eine erfindungsgemäße Verbindung mit vergleichsweise hoher Reaktivität zweckmäßigerweise in Kombination mit einen weiteren farblosen Purpurkuppler verwendet, wobei die Menge des erfindungsgemäßen Maskenkupplers bis zu 30 %, üblicherweise zwischen 20 und 30 %, bezogen auf die Menge des farblosen Purpurkupplers betragen kann.

Bei den erfindungsgemäßen farbfotografischen Aufzeichnungsmaterialien, in denen die Verbindungen der vorliegenden Erfindung mit Vorteil eingesetzt werden können, handelt es sich bevorzugt um mehrschichtige Materialien, die mehrere Silberhalogenidemulsionsschichten oder Emulsionsschichteneinheiten mit unterschiedlicher Spektralempfindlichkeit aufweisen. Als Emulsionsschichteneinheiten werden dabei Laminate von 2 oder mehr Silberhalogenidemulsionsschichten gleicher Spektralempfindlichkeit verstanden. Schichten gleicher Spektralempfindlichkeit müssen aber nicht notwendigerweise benachbart zueinander angeordnet sein, sondern können auch durch andere Schichten, insbesondere auch durch Schichten anderer Spektralempfindlichkeit voneinander getrennt sein.

Jeder der genannten lichtempfindlichen Silberhalogenidemulsionsschichten bzw. Emulsionsschichteneinheiten ist mindestens ein Farbkuppler zugeordnet, der mit Farbentwickleroxidationsprodukten unter Bildung eines nichtdiffundierenden Farbstoffes zu reagieren vermag. Zweckmäßigerweise sind die Farbkuppler nichtdiffundierend und in der lichtempfindlichen Schicht selbst oder in enger Nachbarschaft hierzu untergebracht. Die den zwei oder mehr Teilschichten einer Emulsionsschichteneinheit zugeordneten Farbkuppler brauchen nicht notwendigerweise identisch zu sein. Sie sollen lediglich bei der Farbentwicklung die gleiche Farbe ergeben, normalerweise eine Farbe, die komplementär ist zu der Farbe des Lichtes, gegen das die lichtempfindlichen Silberhalogenidemulsionsschichten empfindlich sind.

Den rotempfindlichen Silberhalgenidemulsionsschichten ist folglich mindestens ein nichtdiffundierender Farbkuppler zur Erzeugung des blaugrünen Teilfarbenbildes zugeordnet, in der Regel ein Kuppler vom Phenol- oder α-Naphtholtyp, Besonders hervorzuheben sind beispielsweise Blaugrünkuppler, wie sie beschrieben sind in US-A-2 474 293, US-A-2 367 531, US-A-2 895 826, US-A-3 772 002, EP-A-0 028 099, EP-A-0 112 514.

Die grünempfindlichen Silberhalogenidemulsionsschichten enthalten mindestens einen nichtdiffundierenden Farbkuppler zur Erzeugung des purpurnen Teilfarbbildes, wobei üblicherweise Farbkuppler vom Typ des 5-Pyrazolons oder des Indazolons Verwendung finden. Weiter kommen als Purpurkuppler auch Cyanacetylverbindungen, Oxazolone, Pyrazolobenzimidazolone und Pyrazolotriazolone in Frage. Besonders hervorzuheben sind beispielsweise Purpurkuppler, wie sie beschrieben sind in US-A-2 600 788, US-A-4 383 027, DE-A-1 547 803,

DE-A-1 810 464, DE-A-2 408 665, DE-A-3 226 163.

Die blauempfindlichen Silberhalogenidemulsionschichten schließlich enthalten mindestens einen nichtdiffundierenden Farbkuppler zur Erzeugung des gelben Teilfarbenbildes, in der Regel einen Farbkuppler mit einer offenkettigen Ketomethylengruppierung. Besonders hervorzuheben sind beispielsweise Gelbkuppler, wie sie beschrieben sind in US-A-3 408 194, DE-A-2 329 587, DE-A-2 456 976.

Farbkuppler dieser Arten sind in großer Zahl bekannt und in einer Vielzahl von Patentschriften beschrieben. Beispielhaft sei hier ferner auf die Veröffentlichungen "Farbkuppler" von W. Pelz, "Mitteilungen aus den Forschungslaboratorien der Agfa, Leverkusen/München", Band III (1961) S. 111, und von K. Venkataraman in "The Chemistry of Synthetic Dyes", Vol. 4., 341 bis 387, Academic Press (1971), verwiesen.

Bei den Farbkupplern kann es sich sowohl um übliche 4-Äquivalentkuppler handeln als auch um 2-Äquivalentkuppler, bei denen zur Farberzeugung eine geringere Menge Silberhalogenid erforderlich ist. 2-Äquivalentkuppler leiten sich bekanntlich von den 4-Äquivalentkupplern dadurch ab, daß sie in der Kupplungsstelle einen Substituenten enthalten, der bei der Kupplung abgespalten wird. Zu den 2-Äquivalentkupplern sind sowohl solche zu rechnen, die praktisch farblos sind, als auch solche, die wie beispielsweise die gelben Farbstoffe der vorliegenden Erfindung eine intensive Eigenfarbe aufweisen, die bei der Farbkupplung verschwindet bzw. durch die Farbe des erzeugten Bildfarbstoffes ersetzt wird. Zu den 2-Äquivalentkupplern sind weiter die bekannten DIR-Kuppler zu rechnen, bei denen es sich um Kuppler handelt, die in der Kupplungsstelle einen abspaltbaren Rest enthalten, der bei Reaktion mit Farbentwickleroxidationsprodukten als diffusionsfähiger Entwicklungsinhibitor oder Vorläufer eines Entwicklungsinhibitors in Freiheit gesetzt wird. In dem erfindungsgemäßen Aufzeichnungsmaterial können auch solche DIR-Kuppler verwendet werden, die bei Reaktion mit Farbentwickleroxidationsprodukten Entwicklungsinhibitoren freisetzen ohne durch Bildung eines Farbstoffes wesentlich zum Farbbild beizutragen.

Bei Bedarf können Farbkupplermischungen verwendet werden, um einen gewünschten Farbton oder ein gewünschte Reaktivität einzustellen. Beispielsweise können wasserlösliche Kuppler in Kombination mit hydrophoben wasserunlöslichen Kupplern verwendet werden. Die Kuppler können auch in polymerisierter Form, z. B. als sogenannte Latexkuppler verwendet werden.

Für die Einarbeitung der Kuppler in die Schichten des farbfotografischen Aufzeichnungsmaterials kommen die gleichen Methoden in Betracht, die auch für die Einarbeitung der erf indungsgemäßen Verbindungen verwendet werden. So verwendet man für die Einverleibung hydrophober Farbkuppler zweckmäßigerweise eines der bekannten Emulgierverfahren, bei dem beispielsweise der Farbkuppler gegebenenfalls in Gegenwart eines hochsiedenden Kupplerlösungsmittels oder Ölbildners in einem organischen Lösungsmittel gelöst und dann in einer Gelatinelösung dispergiert wird. Beispiele für hochsiedende Kupplerlösungsmittel sind Dibutylphthalat und Trikresylphosphat. Weitere Kupplerlösungsmittel sind beispielsweise beschrieben in den US-A-2 322 927, US-A-3 689 271, US-A-3 764 336 und US-A-3 765 897.

Weiterhin ist es möglich, wäßrige Dispersionen der hydrophoben Kuppler herzustellen und den jeweiligen Gießlösungen zuzusetzen. Hierzu werden wäßrige Aufschlämmungen der Kuppler beispielsweise durch intensives Rühren unter Zusatz von scharfkantigem Sand und/oder durch Anwendung vor Ultraschall fein velmahlen. In diesem Zusammenhang sei auch auf die DE-A-2 609 741 verwiesen.

Wenn die erfindungsgemäßen Verbindungen in Kombination mit Purpurkupplern verwendet werden, können sie gemeinsam mit den jeweiligen Farbkupplern in einem Ölbildner gelöst und in Form einer solchen gemeinsamen Lösung der jeweiligen Gießlösung zugesetzt werden. Sie können aber auch der Gießlösung in Form einer separaten Lösung in einem Ölbildner zugesetzt werden.

Zur Stabilisierung der aus den Farbkupplern erzeugten Bildfarbstoffe kann das farbfotografische Aufzeichnungsmaterial zusätzlich weitere bekannte Stabilisierungsmittel enthalten, beispielsweise UV-Absorber und Mittel, die das Ausbleiben der Farbstoffe, insbesondere unter der Einwirkung von Licht, Wärme oder Feuchtigkeit verhindern oder verzögern. Als geeignet für diesen Zweck sind beispielsweise beschrieben worden Phenolderivate, Hydrochinonderivate, p-Alkoxyphenolderivate, Pyrogallolderivate, Gallussäurederivate, 5-Hydroxycumaranderivate, 6-Hydroxychromanderivate und 5-Hydroxyindanderivate.

Wie bereits erwähnt werden die erfindungsgemäßen Verbindungen bevorzugt in Kombination mit Purpurkupplern verwendet. Hierbei handelt es sich insbesondere um hydrophobe Purpurkuppler mit einer guten Löslichkeit in hydrophoben oder hydrophilen Ölbildnern.

In den zwischen den lichtempfindlichen Silberhalogenidemulsionsschichten angeordneten Zwischenschichten, deren Bindemittel vorzugsweise aus Gelatine besteht, können Verbindungen enthalten sein, die mit Farbentwickleroxidationsprodukten zu reagieren vermögen, und die somit eine unerwünschte Diffusion der Farbentwickleroxidationsprodukte verhindern. Beispiele für derartige Verbindungen sind etwa nichtdiffundierende Reduktionsmittel, z. B. Hydrochinonderivate, die bei Reaktion mit den Farbentwickleroxidationsprodukten keinen in den Schichten verbleibenden Farbstoff ergeben, oder aber Farbkuppler, die einen löslichen Farbstoff ergeben, der während der farbfotografischen Verarbeitung aus den Schichten ausgewaschen wird. Weitere geeignete Verbindungen zur Unterdrückung der unerwünschten Diffusion von Farbentwickleroxidationsprodukten sind beispielsweise beschrieben in der Monographie "Stabilization of Photografic Silver Halide Emulsions" von E.J. Birr, The Focal Press, 1st Edition 1974, Seiten 116 bis 122.

Bezüglich weiterer geeigneter Zusätze zu den erfindungsgemäßen farbfotografischen Aufzeichnungsmaterialien oder zu einer ihrer Schichten sei verwiesen auf den Artikel in der Zeitschrift "Product Licencing Indes", Band 92, Dezember 1971, Seiten 107 bis 110.

Die erfindungsgemäßen Aufzeichnungsmaterialien können mit den üblichen Farbentwicklerverbindungen

entwickelt werden, insbesondere solchen der p-Phenylendiaminreihe mit einer primären Aminogruppe z. B. 4-Amino-N,N-dimethylanilin, 4-Amino-N,N-diethylanilin, 4-Amino-3-methyl-N,N-diethylanilin, 4-Amino-3-methyl-N-methyl-N-(β-methylsulfonamidoethyl)-anilin, 4-Amino-N-ethyl-N-(β-hydroxyethyl)-anilin, 4-Amino-3-methyl-N-ethyl-N-(β-hydroxyethyl)-anilin,4-Amino-3-methyl-N-ethyl-N-(β-methoxyethyl)-anilin,4-Amino-3-methyl-N-(β-methiylsulfonamidoethyl)-anilin,4-Amino-N-butyl-N-(ω-sulfobuktyl)-anilin,4-Amino-3-methyl-N-isopropyl-N-(ω-sulfobutyl)-anilin.

Weitere geeignete Farbentwickler sind beispielsweise beschrieben in J. Amer. Chem. Soc., 73, 3200 - 3125 (1951).

**Beispiel 1**

Löslichkeitsbestimmung

Von den erfindungsgemäßen Verbindungen II-1, II-5 und III-1 sowie von den strukturanalogen Vergleichsverbindungen V-1, V-2, V-3, V-4, V-5 und V-6 wurden deren Löslichkeit in Ethylacetat bei 60°C bestimmt. Hierzu wurde ermittelt, wieviele Gewichtsteile Lösungsmittel zum Lösen eines Gewichtsteils Gelbfarbstoff erforderlich sind. Die miteinander zu vergleichenden Farbstoffe unterschieden sich jeweils ausschließlich in der Substitution des Phenylazorestes

V-1 Struktur wie II-1, jedoch $R^1$, $R^2$ = $-CH_3$ (statt $-i-C_3H_7$)
V-2 Struktur wie II-1, jedoch $R^1$, $R^2$ = $-C_2H_5$ entspricht JP-N 58-172647, Verb. CM-1
V-3 Struktur wie II-1, jedoch $R^1$, $R^2$ = $-n-C_3H_7$ gemäß JP-N 58-172647
V-4 Struktur wie II-5, jedoch $R^1$, $R^2$ = $-CH_3$ (statt $-i-C_3H_7$)
V-5 Struktur wie III-1, jedoch $R^1$, $R^2$ = $-CH_3$ (statt $-i-C_3H_7$) gemäß JP-N 58-172647 vgl. Verb. CM-4
V-6 Struktur wie III-1, jedoch mit folgenden Phenylazorest

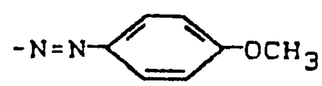

entspricht US-A-2 983 608, Kuppler B

Die Ergebnisse sind aus folgender Tabelle 1 ersichtlich.

**Tabelle 1**

1 Gew.-Teil Verbindung löst sich in X Gew.-Teilen Ethylacetat

| | |
|---|---|
| II-1 | 2,5 |
| V-1 | 15 |
| V-2 | 19 |
| V-3 | 23 |
| II-5 | 2 |
| V-4 | 9 |
| III-1 | 2,5 (bei 40°C) |
| V-5 | 6 |
| V-6 | 5 |

Die hergestellten Lösungen kristallisieren bei Raumtemperatur, z. T. nach einiger Zeit, wieder aus. Durch erneutes Erwärmen können die Farbstoffe in der oben angegebenen Konzentration wieder in Lösung gebracht werden.

**Beispiel 2**

Von der erfindungsgemäßen Verbindung II-1 wurde die Dispersion 1a und von der betreffenden Vergleichsverbindung V-2 wurde die Dispersion 1b jeweils nach der nachfolgend beschriebenen Vorschrift hergestellt. 100 g Maskenkuppler werden in einer Abmischung aus 100 g Trikresylphosphat und 300 g Ethylacetat bei 55°C gelöst. (Für die Vergleichsverbindung V-2 mußte neben Ethylacetat noch soviel Tetrahydrofuran zugesetzt werden, daß sie bei 55°C in Lösung ging). Die Lösung wird in 1 kg einer 7,5-%-igen wäßrigen Gelatine, die

ebenfalls auf 55°C erhitzt ist und mit 10 g Alkanol XC versehen war, mit einem hochtourigen Mischer einemulgiert. Anschließend wurde das niedrig siedende Lösungsmittel im Vakuum entfernt und die zurückbleibende Dispersion bei 6°C erstarrt.

Von beiden Dispersionen wurden erstens mit Hilfe des Coulter-Nano-Sizers der Coulter Electronics, Hialeah, Florida/USA über die periodische Schwankung von in die Dispersion eingestrahltem und gestreutem Laserlicht (Autokorrelationsspektroskopie) die mittlere Teilchengröße und zweitens mit Hilfe des Elzone Counters der Particle Date Inc. Elmhurst, Illinois/USA über die Messung der Widerstandsänderung bei Durchgang eines Teilchens durch eine enge Kapillare die Teilchengrößenverteilung ermittelt. In Fig. 1 und Fig. 2 sind die Histogramme für die Häufigkeitsverteilung (treppenförmige Kurven) FD der Volumina in den jeweiligen Teilchengrößen-Klassen D zwischen 0,3 und 8 µm für die Dispersionen 1a (Fig. 1) und 1b (Fig. 2) zu ersehen. Die 2. Kurve stellt jeweils nie auf 100 % normierte Summenkurve der gleichen Volumenverteilung dar. Im Falle der Dispersion 1a (erfindungsgemäße Verbindung) endet die Kurve bei 2,5 µm. Dies besagt, daß oberhalb dieser Teilchengröße keine weiteren Teilchen in der Dispersion vorhanden sind. Bei dieser Volumendarstellung werden die unerwünschten groben Teilchen und Kristalle im Untersuchungsbereich besonders hoch gewichtet und mit großer Genauigkeit neben den in hoher Überzahl vorhandenen Dispersionströpfchen im Soll-Teilchengrößenbereich von 0,3 µm erfaßt. Letztere sind in der unverdünnten Dispersion mit ca. 200 Milliarden Teilchen pro Milliliter vertreten, während die groben Teilchen wie folgt für die beiden Dispersionen vorliegen:

| Dispersion | Teilchenzahl/ml 2 - 8 µm | Volumenanteil/ml 2 - 8 µm | mittl. Teilchengröße µm |
|---|---|---|---|
| 1a, erf.-gem. | 3,7 x $10^6$ | 20 ppm | 0,3 |
| 2b, Vergleich | 170 x $10^6$* | 4,100 ppm | 0,32 |

*) Die Summenkurvo ist bei 8 µm noch nicht zu Ende.

Aus den Daten ist also leicht zu ersehen, welche Vorzüge der erfindungsgemäße Maskenkuppler bei vergleichbarer Dispergierung hat.

**Beispiel 3**

Gemäß der im Beispiel 2 beschriebenen allgemeinen Vorschrift wurde aus der erfindungsgemäßen Verbindung II-5 die Dispersion 2a und aus der betreffenden Vergleichsverbindung V-4 die Dispersion 2b hergestellt. (Die Vergleichsverbindung V-4 mußte, damit sie in Lösung ging, in der hydrophoben Dispersionsphase auf 70°C erhitzt werden).

Die erhaltenen Dispersionen wurden nach der Erstarrung wieder auf 40°C erhitzt und in einem geschlossenen System mit einer Schlauchpumpe des Typs Masterflex R-7563-00 mit Pumpenkopf No. 7014 der Cole Parmer Instrument Company, Chicago/Illinois über ein Oberflächenfilter des Typs HDC HO50 mit einer Porenweite von 5 94m der Pall Corporation New York/USA filtriert. Die Fördergeschwindigkeit der Schlauchpumpe war auf 60 ml Wasser/min bei 20°C ohne Filter eingestellt. Die Filterfläche des Oberflächenfilters betrug 10,2 $cm^2$. Bei der Filtration wurde nun der sich vor dem Filter aufbauende Druck in Abhängigkeit von der Zeit bei den beiden Dispersionen gemessen. Das Ergebnis für beide Dispersionen ist aus den Diagrammen 2a und 2b der Fig. 3 zu ersehen. Die Dispersion 2a der erfindungsgemäßen Verbindung II-5 zeigte nach 5 min einen Druckanstieg von 0,2 bar, der noch nach 1 Stunde konstant ist. Dagegen stieg der Druck für die Vergleichsdispersion 2b kontinuierlich an. Solche Druckanstiege führen zu beträchtlichen Produktionsproblemen, da ein häufiger Filterwechsel stattfinden muß und die Dosierung während des Begusses nur sehr ungleichmäßig erfolgen kann.

**Beispiel 4**

Auf einen Cellulosetriacetatschichttrager mit Haftschicht wurde eine niederempfindliche Schicht aus einer grünsensibilisierten Silberbromidiodid-Emulsion (6 mol-% AgI) enthaltend 3,0 g $AgNO_3/m^2$, 3,2 g Gelatine/$m^2$, 0,6 g darin dispergierten Farbkuppler A sowie 0,2 mmol der in der Tabelle 3 angegebenen Maskenkuppler, aufgetragen. Über diese Schicht wurde eine Schutzschicht bestehend aus 1,0 g Gelatine/$m^2$ aufgebracht. Beide Schichten wurden mit einem Carbamoylpyridiniumsalz als Härtungsmittel verarbeitbar gemacht. Nach Belichtung hinter einem graduierten Graukeil und Entwicklung nach E. Ch. Gehret, Brit. J. of Photography 1974, S. 597 wurden Dmax, Empfindlichkeit und Dmin-pp ermittelt.

Farbkuppler A

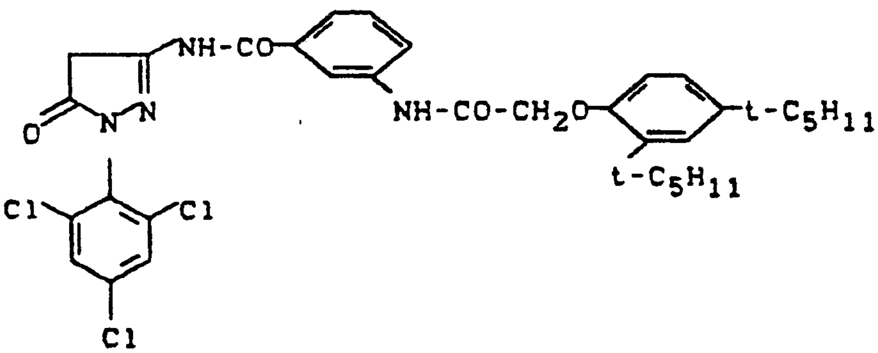

| Maskenkuppler | Dmax | Empfindlichkeit logH | Dmin-pp |
|---|---|---|---|
| - ohne - | 3,03 | -4,00 | 0,35 |
| V-4 | 3,61 | -4,00 | 0,87 |
| V-2 | 3,60 | -3,97 | 0,82 |
| II-1 | 3,59 | -4,00 | 0,55 |
| II-13 | 3,59 | -3,98 | 0,42 |
| II-5 | 3,60 | -4,01 | 0,57 |
| II-3 | 3,60 | -3,99 | 0,63 |
| II-6 | 3,63 | -4,05 | 0,57 |

Aus der Tabelle 3 kann entnommen werden, daß der erfindungsgemäße Maskenkupplertyp bei gleicher Empfindlichkeit wie bei den Vergleichskupplern einen deutlich niederen pp-Schleier bei gleichem Dmax ergibt.

**Patentansprüche**

1. Farbfotografisches Aufzeichnungsmaterial mit mindestens einer Silberhalogenidemulsionsschicht, der ein Purpurkuppler zugeordnet ist, und mindestens einem gelben 4-Bisalkoxyphenylazopyrazolonfarbstoff, der in einer Silberhalogenidemulsionsschicht oder in einer nicht lichtempfindlichen Bindemittelschicht enthalten ist, dadurch gekennzeichnet, daß der gelbe Farbstoff der folgenden Formel 1 entspricht

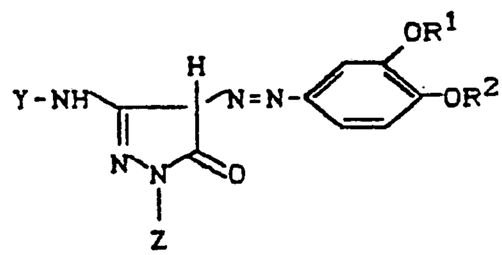

(I)

worin bedeuten

Y Aryl oder Acyl,

$R^1$, $R^2$ je einen Rest der Formel

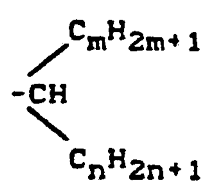

wobei m und n für 1, 2 oder 3 stehen und $m + n \leqslant 4$;

Z einen Phenylrest.

2. Aufzeichnurgsmaterial nach Anspruch 1, dadurch gekennzeichnet, daß in Formel I $R^1$ und $R^2$ unabhängig voneinander Isopropyl oder s-Butyl bedeuten.

3. Aufzeichnungsmaterial nach Anspruch 1, dadurch gekennzeichnet, daß der gelbe Farbstoff der folgenden

Formel II entspricht

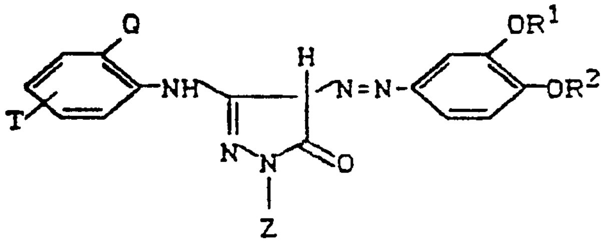

(II)

worin bedeuten

$R^1$, $R^2$ je einen Rest der Formel

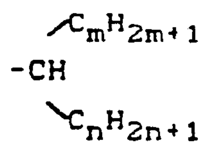

wobei m und n für 1, 2 oder 3 stehen und $m + n \leqslant 4$;

Q H, Halogen oder Alkoxy

T einen organischen Rest

Z einen Phenylrest.

**Claims**

1. Colour photographic recording material containing at least one silver halide emulsion layer with which a magenta coupler is associated and at least one yellow 4-bis-alkoxyphenyl-azopyrazolone dye contained in a silver halide emulsion layer or in a light-insensitive layer of hinder, characterised in that the yellow dye corresponds to the following formula I:

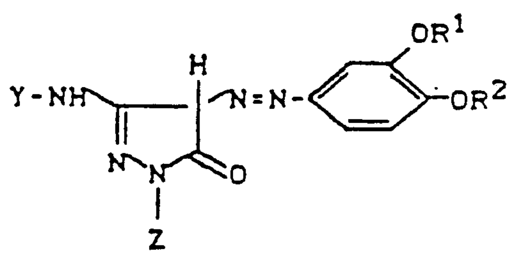

(I)

wherein

Y denotes aryl or acyl,

$R^1$ and $R^2$ each denotes a group of the following formula:

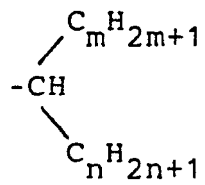

wherein m and n stand for 1, 2 or 3 and $m + n \leqslant 4$, and
Z denotes a phenyl group.

2. Recording material according to claim 1, characterised in that $R^1$ and $R^2$ in formula I denote, independently of one another, isopropyl or s-butyl.

3. Recording material according to claim 1, characterised in that the yellow dye corresponds to the following formula II:

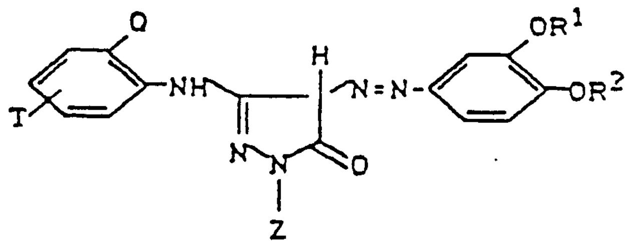

(II)

wherein
$R^1$ and $R^2$ each denotes a group of the following formula

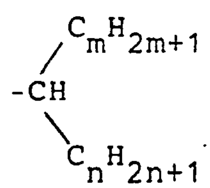

;

wherein m and n stand for 1, 2 or 3 and $m + n \leqslant 4$,
Q denotes H, halogen or alkoxy,
T denotes an organic group and
Z denotes a phenyl group.

**Revendications**

1. Matériau d'enregistrement photographique couleur comportant au moins une couche d'émulsion d'halogénure d'argent à laquelle est associé un coupleur pour magenta et au moins un colorant jaune de 4-bisalcoxyphénylazopyrazolone, qui est contenu dans une couche d'émulsion d'halogénure d'argent ou dans une couche de liant non photosensible, caractérisé en ce que le colorant jaune correspond à la formule I suivante:

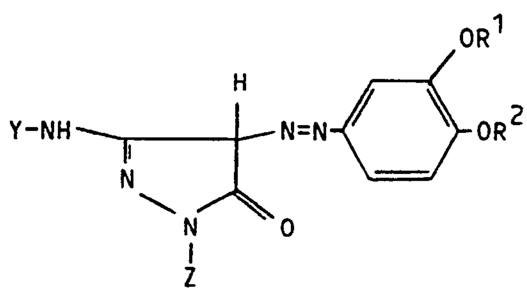

(I)

dans laquelle

Y représente un reste aryle ou acyle;
$R^1$ et $R^2$ représente chacun un reste de formule

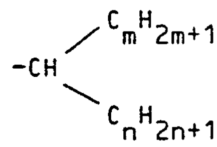

dans laquelle m et n représentent 1, 2 ou 3 et $m + n \leqslant 4$;
Z représente un reste phényle.

2. Matériau d'enregistrement selon la revendication 1, caractérisé en ce que dans la formule I $R^1$ et $R^2$ representent indépendamment l'un de l'autre un reste isopropyle ou s-butyle.

3. Matériau d'enregistrement selon la revendication 1, caractérisé en ce que le colorant jaune correspond à la formule II suivante:

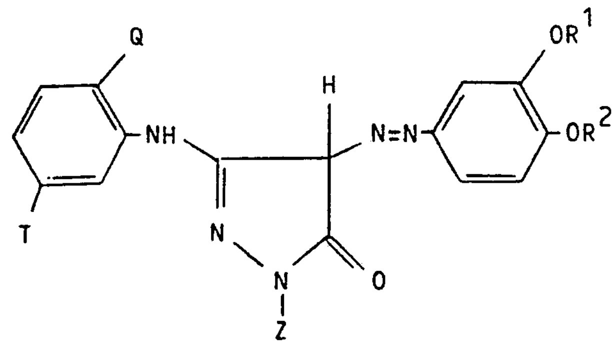

(II)

dans laquelle
$R^1$ et $R^2$ représentent chacun un reste de formule

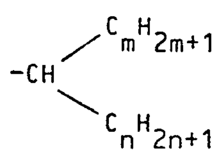

dans laquelle m et n représentent 1, 2 ou 3 et $m + n \leqslant 4$;
Q représente H, un halogène ou un reste alcoxy;
T représente un reste organique;
Z représente un reste phényle.

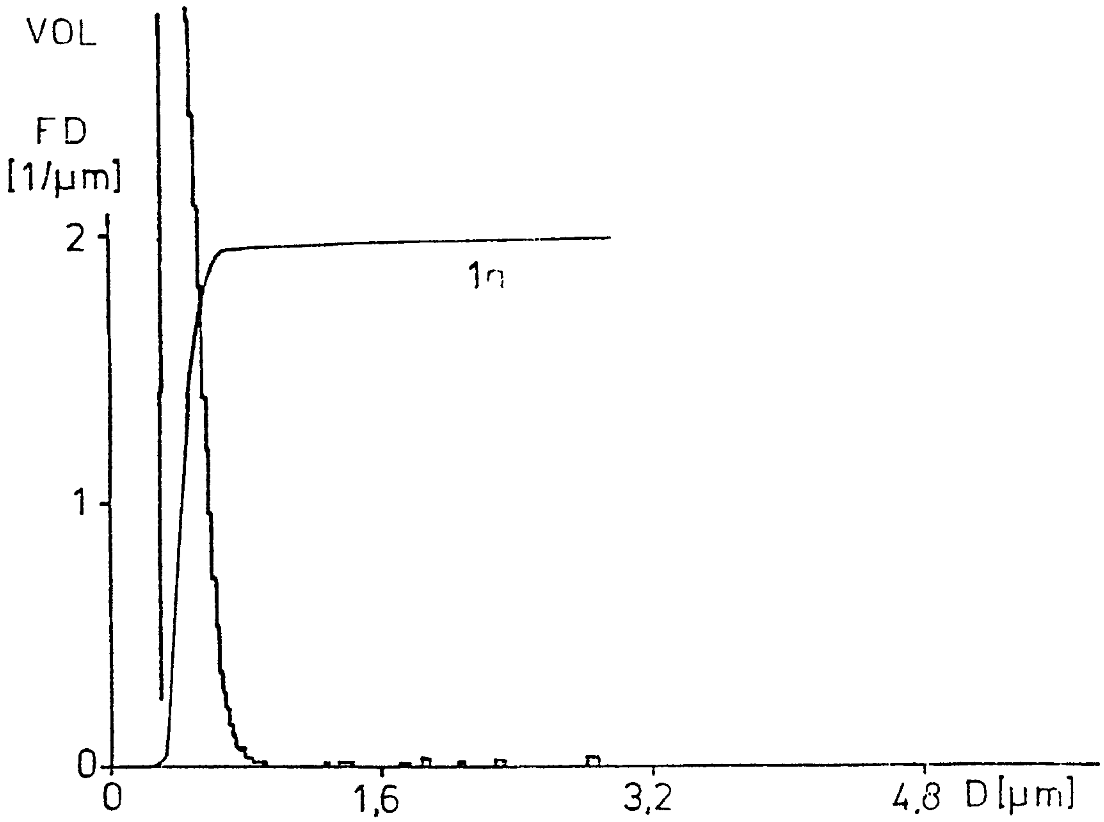


FIG. 1

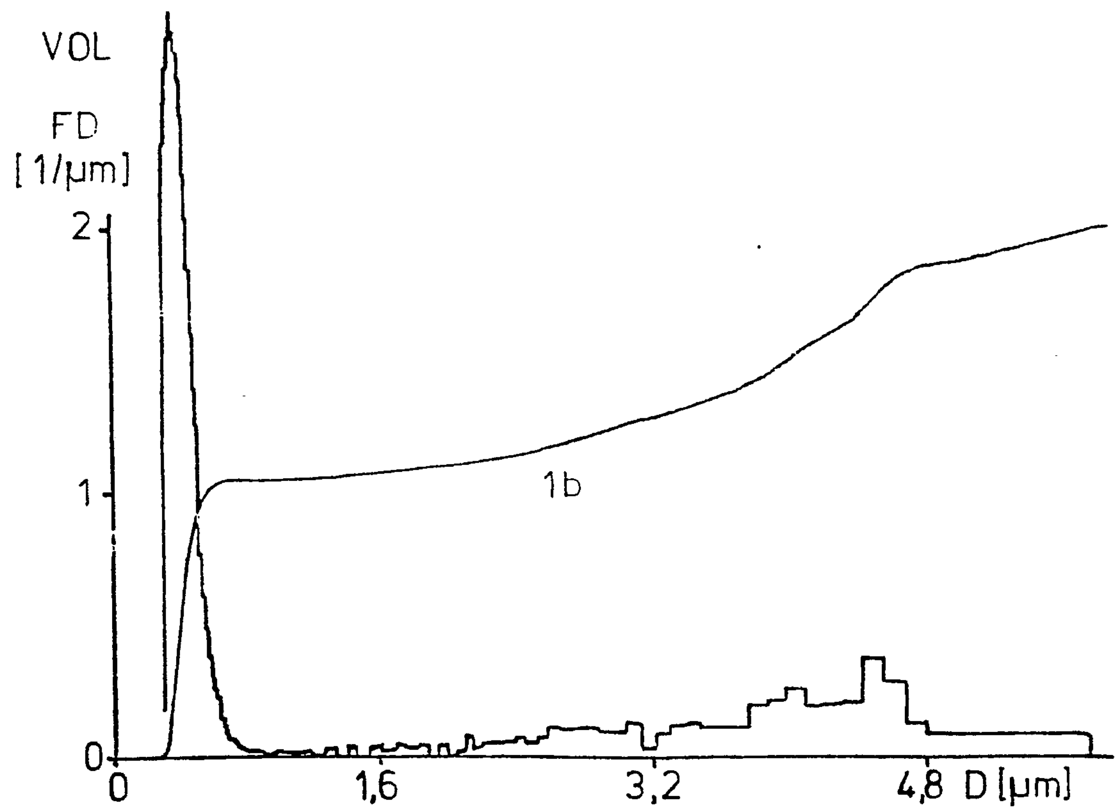


FIG. 2

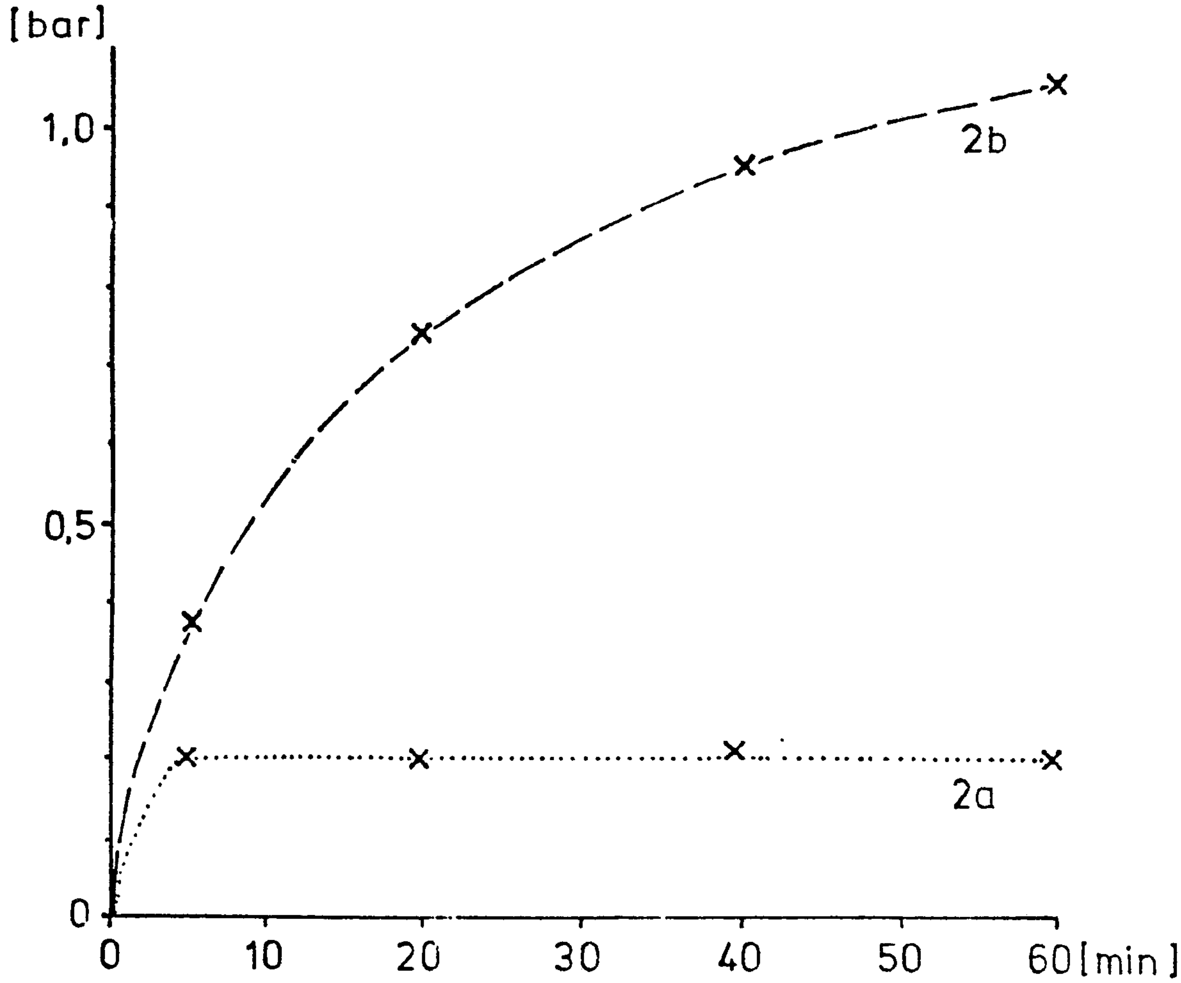


FIG. 3